(19) Europäisches Patentamt / European Patent Office / Office européen des brevets

(11) **EP 1 944 152 B2**

(12) **NEW EUROPEAN PATENT SPECIFICATION**
After opposition procedure

(45) Date of publication and mention
of the opposition decision:
**13.08.2014 Bulletin 2014/33**

(45) Mention of the grant of the patent:
**07.04.2010 Bulletin 2010/14**

(21) Application number: **08100056.4**

(22) Date of filing: **03.01.2008**

(51) Int Cl.:
**B29C 65/16** (2006.01)   **C08K 3/00** (2006.01)
**C08K 5/00** (2006.01)

(54) **Light-absorbing resin composition for use in laser welding, light-absorbing resin molded article, and method for manufacturing light-absorbing resin molded article**

Lichtabsorbierende Harzzusammensetzung zum Laserschweißen, aus einem lichtabsorbierenden Harz geformter Artikel und Verfahren zur Herstellung eines aus einem lichtabsorbierenden Harz geformten Artikels

Composition de résine absorbant la lumière pour soudage au laser, moulage en résine absorbant la lumière, et procédé de fabrication d'un moulage en résine absorbant la lumière

(84) Designated Contracting States:
**DE FR**

(30) Priority: **11.01.2007 JP 2007003396**

(43) Date of publication of application:
**16.07.2008 Bulletin 2008/29**

(73) Proprietor: **Sumitomo Metal Mining Co., Ltd.**
**Tokyo 105-8716 (JP)**

(72) Inventor: **Adachi, Kenji**
**Ichikawa Res. Lab. of Sumitomo Metal Mining Co.**
**Chiba 272-0835 (JP)**

(74) Representative: **Betten & Resch**
**Theatinerstrasse 8**
**80333 München (DE)**

(56) References cited:
**EP-A- 1 008 564**      **WO-A-2005/084955**
**WO-A1-2006/029677**   **DE-A1-102004 018 547**
**US-A- 4 346 144**       **US-A1- 20040 071 957**
**US-A1- 20060 008 640**  **US-B1- 6 221 945**
**US-B1- 6 326 449**

Remarks:
The file contains technical information submitted after the application was filed and not included in this specification

**Description**

1. Field of the Invention

The present invention relates to a light-absorbing resin composition for use in laser welding, a light-absorbing resin molded article, and a method for manufacturing a light-absorbing resin molded article. The composition is used when a laser-welding method is used to join plastic members. The present invention more specifically relates to a light-absorbing resin composition for use in laser welding, a light-absorbing resin molded article, and a method for manufacturing a light-absorbing resin molded article. The composition has thermostability properties hitherto unseen in conventional organic absorbents, and imparts transparency and translucency properties to laser-welded plastic members to a degree that cannot be obtained with a conventional carbon-based absorbent.

2. Description of the Related Art

Over the past several years, a greater number of opportunities have been seen for using laser welding methods to join thermoplastic resins. Laser welding methods are regarded to be advantageous in regard to their ability, e.g., to readily produce vibration-free stable joins even when using members having fine and intricate joining interfaces, to produce no weld flash or smoke, to improve the outward appearance of the joined article, and to broaden the design latitude in the weld regions.

With laser welding, typically, one of the plastic members to be joined is a light-transmitting resin molded article, and the other plastic member comprises a light-absorbing resin molded article that absorbs the laser light and produces heat.

When a laser beam is directed onto the plastic member from a side of the light-transmitting resin molded article, first, the light-absorbing resin molded article melts, whereupon heat is transferred to a side of the light-transmitting resin molded article from a periphery of the melted light-absorbing resin molded article and the light-transmitting resin molded article melts, so that the two molded articles will be joined.

Nd:YAG lasers having a wavelength of 1064 nm and semiconductor lasers having a wavelength of 800 to 1000 are two of the main laser light sources. Therefore, materials that efficiently absorb near-infrared rays at a wavelength of 800 to 1200 nm have been used in light-absorbing resin compositions for laser welding.

Known light-absorbing resin compositions used for laser-welding comprise phthalocyanine compounds, cyanine compounds, aminium compounds, imonium compounds, squalium compounds, polymethine compounds, anthraquinone compounds, azo compounds, and other organic compounds; and carbon black and other inorganic compounds (see Japanese Patent Laid Open Publication No. 2004-148800, for example).

According to Japanese Patent Laid Open Publication No. 2005-290087, there is proposed a light-absorbing resin composition for use in laser welding. In order for the composition to be made more sensitive to the laser, a metal is added in elemental form or in the form of a salt, oxide, hydroxide, or the like in addition to a copper phosphonate having an aromatic ring. Specific examples of metallic oxides present in the proposed resin composition include silicon oxide, titanium oxide, aluminum oxide, iron oxide, magnesium oxide, zinc oxide, cobalt oxide, lead oxide, tin oxide, antimony oxide, indium oxide, manganese oxide, molybdenum oxide, nickel oxide, copper oxide, palladium oxide, lanthanum oxide, antimony-doped tin oxide (ATO), and indium-doped tin oxide (ITO).

According to Japanese PCT WO 2005/084955 A1, a light-absorbing resin composition for use in laser welding to which tin-doped indium oxide (ITO) and antimony-doped tin oxide (ATO) have been added is proposed as an inorganic material having light-absorbing performance in the laser wavelength region.

According to Japanese Patent Laid Open Publication No. 2000-096034, nanoparticles of lanthanum hexaboride ($LaB_6$) or another hexaboride are disclosed as a material for blocking near-infrared rays of sunlight.

However, according to investigations performed by the present inventors, the light-absorbing resin composition for use in laser welding (laser-light-absorbing material) according to Japanese Patent Laid Open Publication No. 2004-148800 typically has a narrow absorption wavelength width, and needs to be added in relatively larger amounts in order for an adequate amount of heat to be generated. The material also has poor thermostability, and accordingly melts when generating heat. When the material is irradiated with a laser, a welded article of uniform stability may not necessarily be obtained.

The inorganic carbon material according to Japanese Patent Laid Open Publication No. 2004-148800 has high thermostability. However, the plastic member is colored black for the material to absorb light in the visible light wavelength region. This is inconvenient when a transparent plastic join member is desired, or when the join regions of a member are not supposed to be black. Nevertheless, increasing demand is occurring in healthcare-related industries and other fields for transparent, colorless joins. Moreover, problems have been presented with carbon black inasmuch as its tendency to aggregate results in an irregular state of dispersion in the host resin, aggregation leads to heat being generated in a non-uniform manner when laser light is absorbed and therefore irregular welding occurs in certain regions, bubbling occurs in localized regions, or the welding time increases.

The light-absorbing resin composition for use in laser welding according to Japanese Patent Laid Open Publication No. 2005-290087, wherein a metal is added in elemental form or in the form of a salt, oxide, hydroxide, or the like in addition to a copper phosphonate having an aromatic ring, has inadequate sensitivity to laser light, and needs to be added in larger amounts in order for the joining to be performed without incident. However, adding a large amount of the composition can alter the basic physical characteristics of the resin molded article itself, and problems have been presented in regard to diminished mechanical strength, or the like. Problems have also been presented inasmuch as most of the composition absorbs light in the visible light wavelength region, and the plastic member undergoes dramatic discoloration.

The light-absorbing resin composition for use in laser welding according to Japanese PCT WO 2005/084955 A1, which contains tin-doped indium oxide (ITO) and antimony-doped tin oxide (ATO), has exceptional transparency and colorlessness, but has a substantially lower infrared absorption rate in comparison to that of carbon. Since absorption starts from the near infrared rays having a relatively long wavelength of 1000 nm or greater, a problem is presented in that the composition has a substantially weaker absorption at the wavelength of 1064 nm from an Nd:YAG laser, or at the wavelengths of 800 to 1000 nm from a semiconductor laser. Accordingly, the composition must be added in large amounts to the plastic member in order for laser welding to be carried out in a suitable manner. However, adding large amounts of the composition will alter the basic physical characteristics of the member itself, and costs will become prohibitive. ITO in particular presents significant problems from a resource and cost standpoint.

## SUMMARY OF THE INVENTION

The present invention was contrived in view of the foregoing problems, and an object thereof in resolving these problems is to provide a light-absorbing resin composition for use in laser welding, a light-absorbing resin molded article, and a method for manufacturing a light-absorbing resin molded article. The composition generates uniform heat from laser light, enables stable laser welding to be performed, and preserves the transparency of the regions that have been welded together.

The inventors conducted intensive studies into resolving the aforementioned problems, and decided as a result that the following are characteristics required for a light-absorbing resin composition for use in laser welding:

1. A high absorption coefficient and excellent absorption performance over the near-infrared wavelengths of 800 to 1200 nm, which are close to the wavelength regions of semiconductor lasers and Nd:YAG lasers
2. Reduced absorption performance in the visible light wavelengths of 380 to 780 nm
3. Strong ability to disperse or melt in a host resin.

The present inventors accordingly conducted studies into a light-absorbing resin composition for use in laser welding, a light-absorbing resin molded article, and a method for manufacturing a light-absorbing resin molded article. The composition exhibits strong absorbance performance over the near-infrared wavelength region of 800 to 1200 nm for laser light used for welding purposes, retains transparency as a result of having adequately reduced absorption performance in regard to visible light, generates uniform heat from laser light to enable stable laser welding to be performed without the outward appearance being compromised by the welded regions, and has a strong ability to disperse or melt in a host resin.

As a result of their studies, the inventors arrived at the present invention by discovering that the use of nanoparticles of a hexaboride expressed by the general formula $XB_6$ (where X is one or more elements selected from La, Ce, Gd, Tb, Dy, Ho, Y, Sm, Eu, Er, Tm, Yb, Lu, Sr, and Ca) as laser-light-absorbing nanoparticles in a light-absorbing resin composition for use in laser welding having a high-molecular-weight dispersant that has a glass transition temperature of 30°C or higher and laser-light-absorbing nanoparticles makes it possible to obtain a light-absorbing resin composition for use in laser welding that facilitates laser welding by exhibiting strong absorption performance in regard to light in the wavelength regions encountered with Nd:YAG and semiconductor lasers, and that is also able to preserve the transparency of an article by substantially transmitting light in the visible wavelength region.

The hexaboride nanoparticles are inorganic nanoparticles that have a function of absorbing light in the laser wavelength region. The nanoparticles have large quantities of free electrons, and produce plasma resonance vibration. When the laser light is illuminated on the nanoparticles, the free electrons are excited and are caused to undergo collective vibration in accordance with the vibration frequency of the light. Energy is absorbed and radiated. The absorption wavelength at this time depends on the free electron density and the energy structure of the nanoparticles, with the plasma absorption wavelength being close to the 800 to 1200 nm wavelength region of Nd:YAG and semiconductor laser light. Electron energy loss spectrography (EELS) with amply high energy resolution enables direct measurement of energy loss peaks due to plasmon excitation. A dramatic effect is obtained when $LaB_6$, $CeB_6$, and $GdB_6$ are used.

The invention is defined in independent claims 1 and 7. Specifically, a first aspect provides a light-absorbing resin composition for use in laser welding, comprising a high-molecular-weight dispersant that has a glass transition temperature of 30°C or higher and laser-light-absorbing nanoparticles. The laser-light-absorbing nanoparticles are nanoparticles of a hexaboride expressed by the general formula $XB_6$ (where X is one or more elements selected from La, Ce, Gd, Tb, Dy, Ho, Y, Sm, Eu, Er, Tm, Yb, Lu, Sr, and Ca).

A second aspect provides the composition according to the first aspect, wherein the hexaboride nanoparticles have a mean particle size of 1000 nm or less.

A third aspect provides a light-absorbing resin molded article in which the composition according to the first or second aspect is diluted using a thermoplastic resin and the high-molecular-weight dispersant contained in the composition, kneaded, and molded. The amount of hexaboride nanoparticles present in a region that is 3 mm or less from a surface, which region constitutes the surface layer of the light-absorbing resin molded article, is from 0.004 $g/m^2$ or greater to 2.0 $g/m^2$ or less.

A fourth aspect provides the molded article according to the third aspect, in which the composition according to the first or second aspect is diluted using a thermoplastic resin and a high-molecular-weight dispersant contained in the composition, kneaded, and molded. The molded article is in the configuration of a plate or film.

A fifth aspect provides the molded article according to the third or fourth aspect, wherein the thermoplastic resin is one or more resins selected from the group consisting of an acrylic resin, a polycarbonate resin, a styrene resin, a low-density polyethylene resin, a polypropylene resin, a polyurethane resin, a polyamide resin, a polyethylene terephthalate resin, a polybutylene terephthalate resin, and a fluororesin.

A sixth aspect provides a light-absorbing molded article, wherein the composition according to the first or second aspect is diluted using a binder, and applied on a surface of a substrate.

A seventh aspect provides the molded article according to the third through sixth aspects, wherein the visible light transmittance is 30% or greater, the maximum absorption value is at a wavelength of 800 to 1100 nm, and the haze value is 30% or less.

An eighth aspect provides a method for manufacturing a light-absorbing molded article in which a light-absorbing resin composition for use in laser welding, which comprises a high-molecular-weight dispersant that has a glass transition temperature of 30°C or higher and laser-light-absorbing nanoparticles, is diluted using a thermoplastic resin and the high-molecular-weight dispersant contained in the composition, kneaded, and molded. The method comprises diluting the laser-light-absorbing nanoparticles, which are nanoparticles of a hexaboride expressed by the general formula $XB_6$ (where X is one or more elements selected from La, Ce, Gd, Tb, Dy, Ho, Y, Sm, Eu, Er, Tm, Yb, Lu, Sr, and Ca), using the high-molecular-weight dispersant and the thermoplastic resin so that the amount of hexaboride nanoparticles present in a region that is 3 mm or less from a surface, which region constitutes the surface layer of the light-absorbing resin molded article, is from 0.004 $g/m^2$ or greater to 2.0 $g/m^2$ or less; kneading; molding; and manufacturing the light-absorbing resin molded article.

According to the present invention, the laser-light-absorbing nanoparticles in the light-absorbing resin composition for use in laser welding, which has a high-molecular-weight dispersant that has a glass transition temperature of 30°C or higher and laser-light-absorbing nanoparticles, are nanoparticles of a hexaboride expressed by the general formula $XB_6$ (where X is one or more elements selected from La, Ce, Gd, Tb, Dy, Ho, Y, Sm, Eu, Er, Tm, Yb, Lu, Sr, and Ca). The composition assumes the form of a solid powder, with the nanoparticles dispersed in the high-molecular-weight dispersant.

As a result of having the above configuration, the present light-absorbing resin composition for use in laser welding can be readily molded into a laser-light-absorbing resin molded article, and demonstrates strong absorption performance with regard to light in the wavelength region of Nd:YAG and semiconductor lasers so as to be readily applied for laser welding. The composition also substantially transmits light in the visible wavelength region, preserves the transparency of the article, has little discoloration, and is able to yield a transparent weld interface. Accordingly, the composition can be used in a greater range of applications in laser welding. The composition can also provide stable inter-plastic joins due to its exceptional thermostability, thus offering tremendous industrial advantages.

BRIEF DESCRIPTION OF THE DRAWINGS

Fig. 1 is a graph showing a relationship between the light wavelength and the weight absorption coefficient of a variety of dispersions of laser-light-absorbing nanoparticles; and

Fig. 2 is a table showing the composition of the light-absorbing resin molded articles pertaining to Examples 1 through 10 and Comparative Examples 2 through 6, as well as their respective characteristics.

DESCRIPTION OF THE PREFERRED EMBODIMENTS

Preferred embodiments of the present invention will be described hereinafter.
The light-absorbing resin composition for use in laser welding of the present embodiment, which has a high-molecular-weight dispersant that has a glass transition temperature of 30°C or higher and laser-light-absorbing nanoparticles, is characterized in that the laser-light-absorbing nanoparticles are nanoparticles of a hexaboride expressed by the general formula $XB_6$ (where X is one or more elements selected from La, Ce, Gd, Tb, Dy, Ho, Y, Sm, Eu, Er, Tm, Yb, Lu, Sr, and Ca).

The laser-light-absorbing nanoparticles of the present invention are inorganic nanoparticles that have a function of absorbing light in the laser wavelength region. The nanoparticles have large quantities of free electrons, and produce plasma resonance vibration. When the laser light is illuminated on the nanoparticles, the free electrons are excited and are caused to undergo collective vibration in accordance with the vibration frequency of the light. Energy is absorbed and radiated. The absorption wavelength at this time depends on the free electron density and the energy structure of the nanoparticles. Certain varieties of nanoparticles may have a plasma absorption wavelength close to the 800 to 1200 nm wavelength region of Nd:YAG and semiconductor laser light. Electron energy loss spectrography (EELS) with amply high energy resolution enables direct measurement of energy loss peaks due to plasmon excitation.

Hexaboride nanoparticles having the general formula $XB_6$ are able to yield desired characteristics in regard to the absorption of laser light. A dramatic effect is obtained when $LaB_6$, $CeB_6$, and $GdB_6$ are used.

Specifically, hexaboride nanoparticles having the general formula $XB_6$ have a maximum absorption value at a wavelength of 800 to 1100 nm when dispersed in a particle size of 1000 nm or less. The hexaboride nanoparticles having the general formula $XB_6$ have an adequately high absorption coefficient at wavelengths close to the maximum absorption value, and accordingly absorb laser light in a wavelength range of 800 to 1200 nm and generate heat in a highly efficient manner.

During their investigations, the inventors observed that films and molded articles in which these nanoparticles were adequately small and uniformly dispersed had transmittivity values that were at a maximum between wavelengths of 500 to 600 nm, and at a minimum between 800 to 1200 nm. Assuming that a bell curve is obtained from the visible light wavelength of 380 to 780 nm with a luminosity peak occurring near 500 nm, then it can be reasoned that such films or molded articles will effectively transmit visible light and effectively absorb light having wavelengths outside this range.

A light-absorbing resin molded article employing the light-absorbing resin composition of the present invention for use in laser welding can have a visible light transmittance of from 30% or greater to 90% or less, and a haze value of 30% or less. The color tone of the light-absorbing resin molded article can be adjusted to a variety of levels in industrial applications using a colorant; therefore, the resin molded article preferably has as high a visible light transmittance as possible. However, if the visible light transmittance exceeds 90%, then the amount of laser-light-absorbing nanoparticles to be added will be extremely small, which will lead to low absorption in the laser light wavelength range of 800 to 1200 nm, and will hinder adequate melting from occurring. Conversely, if the visible light transmittance is 30% or less, the light transmittance of the hexaboride nanoparticles at a wavelength of 800 to 1200 nm will be substantially zero. Specifically, even if the visible light transmittance is less than the above value range, no increase will be observed in the amount of laser light absorbed. Consequently, if it is desired that the light-absorbing resin molded article be made as bright as possible and the effect of coloration be reduced as much as possible, the visible light transmittance should be 30% or greater. No problems will be encountered if the visible light transmittance is 30% or less, as shall be readily apparent.

If defect-free, uniform welds are to be obtained in the light-absorbing resin molded article employing a light-absorbing resin composition of the present invention for use in laser welding, the laser-light-absorbing nanoparticles must be present in a uniform, defect-free state. The light from the laser will be more widely scattered if the laser-light-absorbing nanoparticles are aggregated or segregated, which will result in a higher haze value. If the haze value exceeds 30%, then the light-absorbing resin molded article will be visibly cloudy, which will compromise transparency and result in distinct color variation and flecking. Such a haze value is also undesirable because even during laser welding, heat will be generated locally in a non-uniform manner, which will lead to bubbling or color variation. The haze value is preferably 30% or less, and more preferably 5% or less. If the haze value is 5% or less, then the resulting member will have a very high visible transparency, and will have a favorable appearance, which is of increased industrial value.

The laser-light-absorbing nanoparticles according to the present invention have a mean particle size of 1000 nm or less so that their function as a laser-light-absorbing component is preserved. If the laser-light-absorbing nanoparticles or bulky particles formed from aggregated laser-light-absorbing nanoparticles are 1000 nm or less (and more preferably 200 nm or less) in size, then regardless of whether they have aggregated or not, the nanoparticles will function as a light scattering source in the resulting light-absorbing resin molded article, and make it possible to prevent a phenomenon of the translucent light-absorbing resin molded article appearing cloudy once laser welding has been performed. Moreover, if the nanoparticles are 1000 nm or less in size, their ability to absorb laser light can be prevented from diminishing, regardless of whether they are in an aggregated state or not.

The laser-light-absorbing nanoparticles of the present invention are not perfectly transparent in the visible light region, and have some degree of coloring depending on their type or size, their dispersed or aggregated state, or other factors. However, reducing size of the nanoparticles or dispersing them in a more uniform manner reduces the amount of light scattered thereby. For example, in the case that the laser-light-absorbing nanoparticles have an average size of 200 nm or less and have been uniformly dispersed, a Rayleigh scattering mode will occur, and even when using a black material that does not transmit light in the visible region in a bulky state, the aggregated body of laser-light-absorbing nanoparticles will be transparent to visible light.

Particular importance is ascribed to the state in which the laser-light-absorbing nanoparticles are dispersed in the light-absorbing resin molded article. In the case that the nanoparticles have aggregated without being adequately dispersed, then either the final color state of the molded article will be non-uniform, the regions where the laser light causes heat to be generated will be in a non-uniform distribution and will experience localized bubbling, or the outward appearance after welding has been performed will be imperfect. In order to avoid such problems, a light-absorbing resin molded article in which the laser-light-absorbing nanoparticles are dispersed in a uniform state is prepared in the present invention. In the present invention, first, a dispersion obtained by dispersing the laser-light-absorbing nanoparticles and a dispersant in a solvent to a high degree of uniformity is produced in order to increase the dispersibility of the nanoparticles. The solvent is then heated or otherwise removed from the dispersion, and a light-absorbing resin composition for use in laser welding is produced, the laser-light-absorbing nanoparticles having been uniformly dispersed in the high-molecular-weight dispersant. The composition is then diluted, kneaded, and molded using the same type of thermoplastic resin molding material as the high-molecular-weight dispersant, or a different thermoplastic resin molding material that is nonetheless compatible with the high-molecular-weight dispersant. The intended light-absorbing resin molded article is produced.

In order to increase the dispersibility of the laser-light-absorbing nanoparticles in the end product light-absorbing resin molded article, a dispersant that is suited to the nanoparticles is desirably introduced when the initial laser-light-absorbing nanoparticle dispersion is being prepared. Specifically, the method used to uniformly disperse the nanoparticles together with the dispersant and solvent in the light-absorbing resin molded article may be arbitrarily selected from among methods used to uniformly disperse laser-light-absorbing nanoparticles in a resin. Examples of specific methods include those employing a bead mill, ball mill, sand mill, and ultrasonic dispersion.

The dispersant is preferably a high-molecular-weight dispersant that adheres to the surface of the laser-light-absorbing nanoparticles and, through steric hindrance, prevents the particles from aggregating. A low-molecular-weight dispersant is undesirable. The high-molecular-weight dispersant comprises a polyester, acrylic, urethane, or other type of polymer in which a variety of lipophilic and hydrophilic functional groups is attached to the terminals of the main chain. The type and amount of the high-molecular-weight dispersant can be suitably determined according to the type of laser-light-absorbing nanoparticles used and the surface characteristics thereof, as well as to the affinity and compatibility with the thermoplastic resin added in a later step.

A vacuum dryer, a hot-blast dryer, a Henschel mixer, or another heated mixer is used to remove the solvent from the laser-light-absorbing nanoparticle dispersion; and a light-absorbing resin composition for use in laser welding is formed with hexaboride ($XB_6$) laser-light-absorbing nanoparticles uniformly dispersed in the high-molecular-weight dispersant. The composition will normally be in the form of a smooth, solid powder; however, if the glass transition point of the high-molecular-weight dispersant is lower than room temperature, then the composition will harden into a gel, become sticky, or otherwise become hard to handle once the solvent has been removed. Accordingly, the high-molecular-weight dispersant preferably has a glass transition point of 30°C or higher.

The optimal amount of the high-molecular-weight dispersant to be compounded is determined according to the type of dispersant. The dispersant can be used in any desired amount, but the amount is preferably equivalent to about two to ten times the weight of the laser-light-absorbing nanoparticles. As long as the amount is equivalent to two or more times the weight of the nanoparticles, the amount will be adequate in regard to the dispersibility of the nanoparticles in the end product light-absorbing resin molded article. As long as the amount is equivalent to ten times the weight of the nanoparticles or less, it will be possible to prevent cloudiness from obscuring the transparency of the end product molded article or other adverse effects, depending on the degree of affinity shared with the resin constituting a main component of the end product molded article.

Preferred examples of the thermoplastic resin used in the light-absorbing resin molded article that comprises a thermoplastic resin and laser-light-absorbing nanoparticles include acrylic resins, polycarbonate resins, styrene resins, low-density polyethylene resins, polypropylene resins, polyurethane resins, polyamide resins, polyethylene terephthalate resins, polybutylene terephthalate resins, and fluororesins.

Examples of acrylic resins include polymers or copolymers having methyl methacrylate, ethyl methacrylate, propyl methacrylate, or butyl methacrylate as a main raw material; and vinyl acetate, styrene, acrylonitrile, methacrylonitrile, an acrylic ester having a $C_1$-$C_8$ alkyl group, or another copolymerization component, if so required. For example, the acrylic resin could be a copolymer obtained by using 50 to 99.95 mol% of methyl methacrylate and 0.05 to 50 mol% of an alkyl ester of acrylic acid or another copolymerizable monomer.

Examples of styrene resins include polystyrene, acrylonitrile-styrene copolymers, methyl methacrylate-styrene copolymers, acrylonitrile-methyl methacrylate-styrene resins, acrylonitrile-butadiene-styrene resins, acrylonitrile-acrylic rubber-styrene resins, acrylonitrile-EPDM-styrene resins, and other copolymers obtained using 30 to 100 mol% of styrene and 0 to 70 mol% of a copolymerizable monomer.

Examples of fluororesins include polyfluoroethylene, polydifluoroethylene, polytetrafluoroethylene, ethylene-difluoroethylene copolymers, ethylene-polytetrafluoroethylene copolymers, and polytetrafluoroethylene-perfluoroalkoxyethylene copolymers.

If necessary, the light-absorbing resin molded article may comprise one or two or more stabilizers, lubricants, fillers, reinforcers such as glass fiber or carbon fiber, dyes, or pigments.

The hexaboride nanoparticles used as the laser-light-absorbing nanoparticles must be uniformly dispersed, and may be uniformly dispersed throughout the entire light-absorbing resin molded article or within the coating film on the surface of the molded article.

The amount of hexaboride nanoparticles in a region 3 mm or less from a surface, which region constitutes the surface layer of the light-absorbing resin molded article, is preferably 0.004 $g/m^2$ to 2.0 $g/m^2$. The reason that the amount is stipulated in terms of the concentration in the region of the surface layer at a thickness of 3 mm or less is that the portion that contributes to joining by melting when the laser beam is directed on the light-absorbing resin molded article is substantially the portion in the region that is 3 mm or less from the surface of the molded article. Another reason is that if the hexaboride content in the region 3 mm or less below the surface of the molded article is less than the range of 2.0 $g/m^2$, it will be possible to avoid the member turning an excessively dark shade of green, depending on the thickness of the molded article. A further reason is that it will be possible to prevent evaporation of the resin or dispersant from too much locally generated heat, the formation of bubbles around the weld region, and other concomitant adverse effects. On the other hand, if the hexaboride nanoparticle content exceeds 0.004 $g/m^2$, then more energy will be required to absorb the irradiated laser light, and increasing the laser power allows an adequate difference to be achieved between the amounts of heat produced by the laser in the light-transmitting resin and the light-absorbing resin molded article. This is preferred because welding will proceed in a favorable manner.

The light-absorbing resin molded article can be molded into any desired shape according to need; e.g., a flat, curved, or other complex shape. A flat light-absorbing resin molded article can be adjusted as needed from the thickness of a plate to that of a film. A flat resin sheet can then be molded into a sphere or any other shape using post-fabrication.

The method used to mold the light-absorbing resin molded article can be injection molding, extrusion molding, compression molding, rotational molding, or any other desired method. Injection molding and extrusion molding are especially suitable methods for obtaining molded articles. Methods for obtaining molded articles in the form of a sheet or film using extrusion molding involve withdrawing a molten thermoplastic resin extruded from a T-die or other type of extruder while the resin is cooled on a cooling roll.

In the case that the resin molded article is able to be cast using a monomer solution, as with acrylic resins, fluororesins, or the like, then the light-absorbing resin composition for use in laser welding is either mixed with and made to dissolve in an acrylic syrup raw solution, or is directly mixed with the hexaboride nanoparticle dispersion, caused to dissolve therein, and cast in a mold. A polymerization step is then performed and the molded article is obtained. In this case, the solvent and dispersant present in the nanoparticle dispersion are selected so as to be compatible with the monomer solution, initiator, crosslinker, or other additive typically present in an acrylic syrup raw solution. The reason is to prevent such solvents and dispersants from hindering the acrylic polymer polymerization process, and accordingly causing voids to form in the resin molded article.

A description shall next be provided for a method for dispersing the laser-light-absorbing nanoparticles in a coating film provided to the surface of a substrate of the molded article.

First, a bead mill, ball mill, sand mill, ultrasonic dispersing, or another method is used to disperse the nanoparticles in a desired solvent using a dispersant, resulting in a nanoparticle dispersion. A binder resin is added thereto to produce a coating solution.

The coating solution is applied to the substrate surface of the molded article. It will be possible to form a thin film coating with the nanoparticles dispersed in a medium as long as the solvent is evaporated off and the resin is cured using a prescribed method. There are no particular limitations as to the thickness of the coating film, but a thickness range of 1 to 100 $\mu$m is preferred. There are no particular limitations as to the coating method, as long as the nanoparticle-containing resin is uniformly coated on the substrate surface. Examples of suitable methods include bar coating, gravure coating, spray coating, dip coating, screen printing, and brush coating. Dispersing the nanoparticles directly in a binder resin is preferred from an environmental and industrial perspective since the solvent does not have to be evaporated off after the solution is applied to the substrate surface.

UV-curing resins, thermosetting resins, electron-beam-curing resins, normal-temperature curing resins, thermoplastic resins, and the like can be suitably selected as the binder resin, according to need. Specific examples include polyethylene resins, polyvinyl chloride resins, polyvinylidene chloride resins, polyvinyl alcohol resins, polystyrene resins, polypropylene resins, ethylene-vinyl acetate resins, polyester resins, polyethylene terephthalate resins, fluororesins, polycarbonate resins, acrylic resins, and polyvinyl butyral resins. Binders having metal alkoxides may also be used.

Typical examples of metal alkoxides include alkoxides of Si, Ti, Al, and Zr. An oxide film can be formed by hydrolyzing a binder having such a metal alkoxide.

The joining surfaces between the laser-welded light-transmitting resin and the light-absorbing resin molded article may be flat or in the form of mated concave and convex shapes. The light-absorbing resin molded article may be coated on one or both of the joining surfaces.

The conditions under which the laser beam is directed can be suitably controlled, but ordinarily the beam is output at 5 to 500 W, and the scanning rate is 2 to 500 mm/s. The angle at which the laser beam is directed is preferably perpendicular to the joining surfaces.

The present invention will be described in further detail hereinafter with reference to examples and comparative examples, which are not provided by way of limitation.

(Example 1)

(Manufacture of laser-light-absorbing nanoparticle dispersion)

5 wt% of lanthanum hexaboride ($LaB_6$) nanoparticles made by Sumitomo Metal Mining, 50 wt% of a toluene solution (active substance: 40%) of a styrene-acrylic high-molecular-weight dispersant UG-4030 (made by Toagosei; solid at room temperature; glass transition point: 52°C), and 45 wt% of toluene were weighed out; loaded into a paint shaker mill filled with zirconia beads; and subjected to pulverizing and dispersing treatments for 6 hrs to yield a $LaB_6$ dispersion (dispersion A).

The size of the $LaB_6$ nanoparticles dispersed in dispersion A was measured using an ELS-8000 (Otsuka Electronics) using the dynamic light scattering theory. The measurements showed the nanoparticles to be 113 nm in size.

Dispersion A was then diluted using toluene so that the concentration of $LaB_6$ nanoparticles reached 0.01 wt%. The diluted solution was introduced into a capsule that was 1 cm in thickness, and the transmittance was measured from the ultraviolet range to the near infrared range using a U-4000 spectrophotometer (Hitachi). Assuming the Lambert-Beer law applies in this case, the absorption coefficient e expressed in terms of weight concentration was measured for each wavelength using Equation (1) below.

$$e = [log(100/T)]/C \qquad\qquad (1)$$

(T: transmittance at wavelength $\lambda$ (%); C: dispersion filler concentration (g/L))

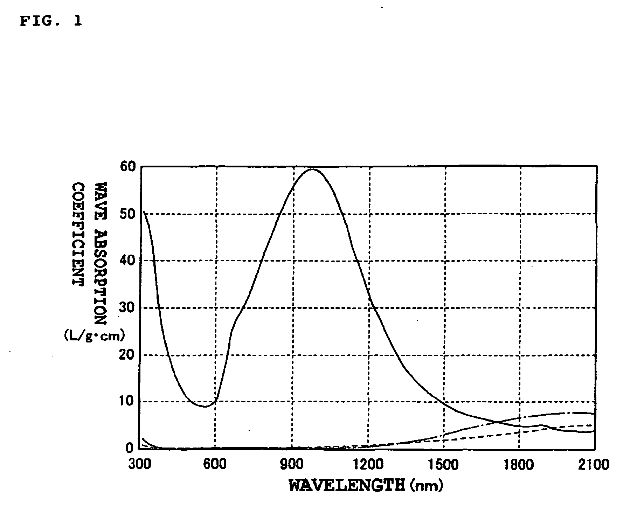

The measurement results are plotted along the solid line in the graph shown in Fig. 1, with the x-axis being the wavelength of light in the visible and near-infrared region, and the y-axis being the weight absorption coefficient e expressed in terms of weight concentration.

Fig. 1 shows that dispersion A had high absorption with a peak near the 950 nm wavelength. In the wavelengths of 380 to 780 nm in the visible light region, an absorption minimum value was observed near 550 nm, and it was evident that dispersion A was able to transmit visible light. It shall be apparent that some absorption occurred in the vicinity of the wavelengths at which the minima were observed; therefore, dispersion A was colored dark green. At 800 to 1100 nm, which is the main laser light wavelength range, the weight absorption coefficient was larger than 45 L/gcm, and it was evident that the $LaB_6$ nanoparticles were a material that demonstrated the greatest ability among inorganic substances to absorb near infrared rays. The absorption profile confirmed that the $LaB_6$ nanoparticles were extremely useful in absorbing light from a semiconductor laser having a wavelength of 800 to 1000 nm and from an Nd:YAG laser having a wavelength of 1064 nm.

(Example 2)

(Manufacture of light-absorbing resin composition for use in laser welding and light-absorbing resin molded article)

When dispersion A, which was used in Example 1, was heated and the toluene solvent component had been evaporated off, a light-absorbing resin composition for use in laser welding was obtained in the form of a solid powder in which 20 wt% of the $LaB_6$ nanoparticles had been uniformly dispersed within the high-molecular-weight dispersant. One weight part of the light-absorbing resin composition for use in laser welding in which the $LaB_6$ nanoparticles had been dispersed (dispersion B) was mixed with 7 wt parts of colorless transparent acrylic resin pellets. A twin-screw extruder was used to melt-knead the resulting mixture at 280°C, and the extruded strands were cut into pellets, resulting in a master batch having $LaB_6$ nanoparticles in a concentration of 2.5% as a light-absorbing component.

The master batch was further diluted using acrylic resin pellets, and uniformly mixed in a blender. The resulting mixture was extruded through a T-die to a thickness of 1.0 mm, resulting in a sample acrylic resin plate, which was a light-absorbing resin molded article having the $LaB_6$ nanoparticles uniformly dispersed at a concentration of 0.015 wt% within the entire resin (the sample acrylic resin plate in which the $LaB_6$ nanoparticles had been dispersed is referred to as "plate 1" below).

Plate 1 was a sample in the form of a plate measuring 5 cm $\times$ 9 cm, and was transparent green.

For purposes of comparison, a colorless translucent plate was also prepared. This plate had the same dimensions as plate 1 but contained no $LaB_6$ nanoparticles (the sample acrylic resin plate that contained no laser-light-absorbing nanoparticles is referred to as "plate 2" below).

The amount of $LaB_6$ nanoparticles present to a depth of 1 mm in plate 1, which was a light-absorbing resin molded article, was 0.18 $g/m^2$. This value was determined by multiplying the volume in one square meter of the acrylic resin plate 1 by the density of the acrylic resin ($g/cm^3$) by the weight concentration of the nanoparticles (%); i.e., 100 cm x 100 cm $\times$ 0.1 cm $\times$ 1.2 g/cm $\times$ 0.00015.

An U-4000 spectrophotometer (Hitachi) was used to measure the optical characteristics of plate 1, which contained the $LaB_6$ nanoparticles. The visible light transmittance was 68%, and light transmittance at a wavelength of 940 nm was 22%. It was evident that adequate visual brightness was achieved, transparency devoid of cloudiness was obtained, and light at the semiconductor laser wavelength of 940 nm was absorbed. Plate 1 exhibited a uniformly green color devoid of any visible variation, and the $LaB_6$ nanoparticles were noted to have been uniformly dispersed. A hazemeter (Murakami Color Research Laboratory) was used to measure the haze value of plate 1 as an index for observing the degree to which the $LaB_6$ nanoparticles had aggregated. The haze value was 2.0%, which was adequately low.

(Comparative Example 1)

The same procedure performed in Example 1 was followed, with the exception that an XG-4000 high-molecular-weight dispersant (Toagosei; glass transition point: -61°C) was used. This dispersant assumes liquid form at room temperature. A dispersion pertaining to Comparative Example 1 was produced, with the dispersed $LaB_6$ nanoparticles being 152 nm in size.

The $LaB_6$ nanoparticle dispersion pertaining to Comparative Example 1 was heated and the toluene was evaporated off, resulting in a light-absorbing resin composition for use in laser welding having 20 wt% of the $LaB_6$ nanoparticles uniformly dispersed in the high-molecular-weight dispersant. However, the composition formed into a sticky gel, and resisted being readily blended with clear pellets or weighed out accurately in subsequent steps. The composition was accordingly discarded and the examination was concluded.

(Example 3)

(Assessment of laser welding)

The plates prepared in Example 2; i.e., plate 1 (which contained the $LaB_6$ nanoparticles) and plate 2 (which did not) were placed on top of one another, and bonded tightly using a compression jig. A laser beam was directed on the bonded article from the plate 2 side over 3 cm in the center along the 5-cm-width direction. A semiconductor laser with an output of 30 W (made by Fine Device; wavelength: 940 nm) was used to direct light at a focal point diameter of 0.8 mm and a scanning rate of 16 mm/s. Plate 1, which contained the $LaB_6$ nanoparticles, generated heat and melted while being irradiated with the laser beam. Plate 2 then began to melt as the heat propagated, and the two plates fused together. The assembly was cooled to a solid to end the joining process, resulting in two joined plates. The state of the join did not change, even when the compression jig was opened.

The outward appearance of the joined plates was macroscopically observed, and assessed to be devoid of any color variation while exhibiting no problems in regard to surface gloss. A wedge was then inserted into a gap between the joined plates. A force was applied to separate them, and the strength of the joined region was estimated. It was evident that the joined region remained intact even when a strong force was applied. The following scale was used to evaluate the strength of the join. ○: Remained intact even when subjected to a strong force, △: the plates were able to be joined, but were separated using light force, and ×: the plates were imperfectly joined (the same assessment scale was used for the examples and comparative examples below).

(Example 4)

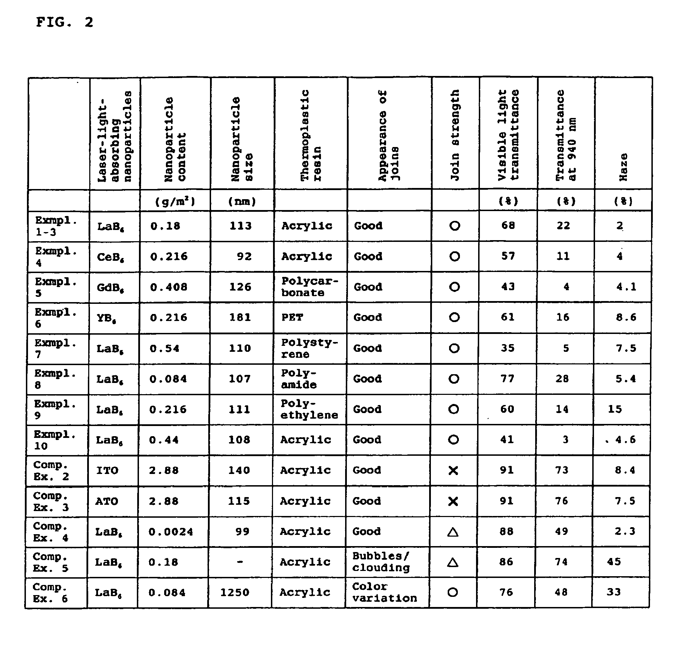

The same procedure performed in Examples 1 through 3 was followed, with the exception that the $LaB_6$ nanoparticles were replaced with cerium hexaboride ($CeB_6$) nanoparticles, and the percentage of the resin diluted into the plate from the master batch was changed so that the concentration of $CeB_6$ in plate 1 reached 0.018%. A toluene dispersion in which the $CeB_6$ nanoparticles had been uniformly dispersed, a light-absorbing acrylic resin composition, a master batch, and plate 1 (light-absorbing resin molded article) were prepared in the stated order. The optical characteristics of plate 1 were assessed, and a laser welding test evaluation was performed. The results are shown in Fig. 2. The results were substantially the same across all evaluation categories in comparison to when the $LaB_6$ nanoparticles were used. The amount of $CeB_6$ nanoparticles was $1200 \times 0.00018 = 0.216$ g/m$^2$ to a depth of 1 mm in plate 1 used in Example 4.

(Example 5)

The same procedure performed in Examples 1 through 3 was followed, with the exception that the $LaB_6$ nanoparticles were replaced with gadolinium hexaboride ($GdB_6$) nanoparticles, polycarbonate resin pellets were used for the thermoplastic resin, the melting temperature of the twin-screw extruder was set to 300°C, and the percentage of the resin diluted in the plate test piece from the master batch was changed so that the concentration of $GdB_6$ in the plate reached 0.034% (the amount of $GdB_6$ nanoparticles to a depth of 1 mm in the plate was 0.408 g/m$^2$). A toluene dispersion in which the $GdB_6$ nanoparticles had been uniformly dispersed, a primary polycarbonate resin composition, a master batch, and plate 1 (light-absorbing resin molded article) were prepared in the stated order. The optical characteristics of plate 1 were assessed, and a laser welding test evaluation was performed. The results are shown in Fig. 2. The transmittance at a wavelength of 940 nm with regard to the visible light transmittance was slightly worse than when the $LaB_6$ nanoparticles were used, but the results in the laser welding evaluation were substantially the same as when the $LaB_6$ nanoparticles were used.

(Example 6)

The same procedure performed in Examples 1 through 3 was followed, with the exception that the $LaB_6$ nanoparticles were replaced with yttrium hexaboride ($YB_6$) nanoparticles, polyethylene terephthalate resin pellets were used for the thermoplastic resin, the melting temperature of the twin-screw extruder was set to 270°C, and the percentage of the resin diluted in plate test piece from the master batch was changed so that the concentration of $YB_6$ in the plate reached 0.018% (the amount of $YB_6$ nanoparticles to a depth of 1 mm in the plate was 0.216 g/m$^2$). A toluene dispersion in which the $YB_6$ nanoparticles had been uniformly dispersed, a primary polyethylene terephthalate resin composition, a master batch, and plate 1 (light-absorbing resin molded article) were prepared in the stated order. The optical characteristics of plate 1 were assessed, and the laser welding test evaluation was performed. The results are shown in Fig. 2. The PET resin crystallized rapidly, and some cloudiness due thereto was apparent over the entire plate. The cloudiness contributed to a relatively higher haze value. The visible light transmittance at a wavelength of 940 nm was slightly worse than when the $LaB_6$ nanoparticles were used, but the results in the laser welding evaluation were substantially the same as when the $LaB_6$ nanoparticles were used.

(Comparative Example 2)

20 wt% of ITO nanoparticles made by Sumitomo Metal Mining, 70 wt% of a toluene solution (active substance: 40%) of a styrene-acrylic high-molecular-weight dispersant UG-4030 (made by Toagosei; solid powder at room temperature; glass transition point: 52°C), and 10 wt% of toluene were weighed out; loaded into a paint shaker filled with zirconia beads; and subjected to pulverizing and dispersing treatments for 6 hrs to yield an ITO nanoparticle dispersion pertaining to Comparative Example 2. The nanoparticles dispersed in the dispersion pertaining to Comparative Example 2 were 140 nm in size. The nanoparticle dispersion pertaining to Comparative Example 2 was diluted using toluene so that the concentration of ITO nanoparticles reached 0.1 wt%. The absorption coefficient expressed in terms of weight concentration was measured in the same manner as performed in Example 1. The values obtained from the measurements were plotted in a single-dot chain line on the graph in Fig. 1 in the same manner as in Example 1.

As is clear from the profile shown by the single-dot chain line in Fig. 1, the ITO nanoparticle dispersion pertaining to Comparative Example 2 is characterized in absorbing near infrared rays whose wavelengths are longer than approximately 1100 nm. However, the maximum absorption at the wavelengths in the measurement range could not be attained. The maximum weight absorption coefficient was low; i.e., approximately 8 L/gcm, and it was evident from a comparison made of peak absorption values with the $LaB_6$ nanoparticles pertaining to the present invention that the resulting effect was merely about one-seventh the value or less. The difference was even greater at a wavelength of 940 nm, and the absorption coefficient of the ITO nanoparticles was about 1/400 as large as that of the $LaB_6$ nanoparticles. These results demonstrate that the ITO nanoparticles must be used in an amount that is larger than the amount of the $LaB_6$ nanoparticles by three or more significant digits if they are to be able to yield the same effect obtained with the $LaB_6$ nanoparticles.

A light-absorbing resin composition for use in laser welding in which ITO nanoparticles had been uniformly dispersed in the same manner as in Examples 2 and 3 using the ITO dispersion pertaining to Comparative Example 2, a master batch, and plate 1 (light-absorbing resin molded article) having a thickness of 1 mm and an ITO nanoparticle concentration of 0.24 wt% (ITO content: 2.88 g/m$^2$) were then prepared in the stated order. The optical characteristics of plate 1 were assessed, and a laser welding test evaluation was performed. The results are shown in Fig. 2.

Despite the fact that the ITO nanoparticle content of plate 1 exceeded the LaB$_6$ nanoparticle content in, e.g., Examples 1 through 4 by one significant digit or more in Comparative Example 2, plate 1 substantially did not melt when irradiated with the laser beam, and the two plates remained imperfectly joined.

(Comparative Example 3)

20 wt% of ATO nanoparticles made by Sumitomo Metal Mining, 70 wt% of a toluene solution (active substance: 40%) of a styrene-acrylic high-molecular-weight dispersant UG-4030 (made by Toagosei; solid powder at room temperature; glass transition point: 52°C), and 10 wt% of toluene were weighed out; loaded into a paint shaker filled with zirconia beads; and subjected to pulverizing and dispersing treatments for 6 hrs to yield an ATO nanoparticle dispersion pertaining to Comparative Example 3. The nanoparticles dispersed in the dispersion pertaining to Comparative Example 3 were 115 nm in size. The nanoparticle dispersion pertaining to Comparative Example 3 was diluted using toluene so that the concentration of ATO nanoparticles reached 0.1 wt%. The absorption coefficient expressed in terms of weight was measured in the same manner as performed in Example 1. The values obtained from the measurements were plotted on the dotted line in the graph in Fig. 1 in the same manner as in Example 1.

As shown in the dotted line profile in Fig. 1, the ATO nanoparticle dispersion is characterized in absorbing near infrared rays having wavelengths that are longer than approximately 900 nm. The maximum absorption at the wavelengths in the measurement range could not be attained. The maximum weight absorption coefficient was low; i.e., approximately 5 L/gcm at a wavelength of 2100 nm, and it was evident from a comparison of peak absorption values made with the LaB$_6$ nanoparticles pertaining to the present invention that the resulting effect was merely about one-eleventh the value or less. The difference was even greater at a wavelength of 940 nm, and the absorption coefficient of the ATO nanoparticles was about 1/180 as large as that of the LaB$_6$ nanoparticles.

These results demonstrate that ATO nanoparticles must be used in an amount that is larger than the amount of the LaB$_6$ nanoparticles by three or more significant digits if they are to be able to yield the same effect obtained with the LaB$_6$ nanoparticles.

A light-absorbing resin composition for use in laser welding in which ATO nanoparticles had been uniformly dispersed in the same manner as in Examples 2 and 3 using the ATO dispersion pertaining to Comparative Example 3, a master batch, and plate 1 (light-absorbing resin molded article) having a thickness of 1 mm and an ATO nanoparticle concentration of 0.24 wt% (ATO content: 2.88 g/m$^2$) were then prepared in the stated order. The optical characteristics of the plate 1 sample were assessed, and a laser welding test evaluation was performed. The results are shown in Fig. 2.

Despite the fact that the ATO nanoparticle content of plate 1 exceeded the LaB$_6$ nanoparticle content in, e.g., Examples 1 through 4 by one significant digit or more, plate 1 substantially did not melt when irradiated by the laser beam, and the two plates remained imperfectly joined.

(Example 7)

The same procedure performed in Examples 1 through 3 was followed, with the exception that polystyrene resin pellets were used for the thermoplastic resin, the melting temperature of the twin-screw extruder was set to 240°C, and the percentage of the resin diluted into the plate test piece from the master batch was changed so that the concentration of LaB$_6$ in plate 1 reached 0.045% (the amount of LaB$_6$ nanoparticles to a depth of 1 mm in the plate was 0.54 g/m$^2$). A toluene dispersion in which the LaB$_6$ nanoparticles had been uniformly dispersed, a light-absorbing resin composition for use in laser welding, a master batch, and plate 1 (light-absorbing resin molded article) were prepared in the stated order. The optical characteristics of plate 1 were assessed, and a laser welding test evaluation was performed. The results are shown in Fig. 2. The visible light transmittance at a wavelength of 940 nm and the haze value were slightly worse than when acrylic resin was used, but the results in the laser welding evaluation were substantially the same as when the acrylic resin was used.

(Example 8)

The same procedure performed in Examples 1 through 3 was followed, with the exception that polyamide resin pellets were used for the thermoplastic resin, the melting temperature of the twin-screw extruder was set to 220°C, and the percentage of the resin diluted in the plate test piece from the master batch was changed so that the concentration of LaB$_6$ in plate 1 reached 0.007% (the amount of LaB$_6$ nanoparticles to a depth of 1 mm in the plate was 0.084 g/m$^2$). A toluene dispersion in which the LaB$_6$ nanoparticles had been uniformly dispersed, a light-absorbing resin composition for use in laser welding, a master batch, and plate 1 (light-absorbing resin molded article) were prepared in the stated order. The optical characteristics of plate 1 were assessed, and a laser welding test evaluation was performed. The results are shown in Fig. 2. The results across all categories were substantially the same as when the acrylic resin was used.

(Example 9)

The same procedure performed in Examples 1 through 3 was followed, with the exception that polyethylene resin pellets were used for the thermoplastic resin, the melting temperature of the twin-screw extruder was set to 240°C, and the percentage of the resin diluted in the plate test piece from the master batch was changed so that the concentration of $LaB_6$ in plate 1 reached 0.018% (the amount of $LaB_6$ nanoparticles to a depth of 1 mm in the plate was 0.216 g/m$^2$). A toluene dispersion in which the $LaB_6$ nanoparticles had been uniformly dispersed, a light-absorbing resin composition for use in laser welding, a master batch, and plate 1 (light-absorbing resin molded article) were prepared in the stated order. The optical characteristics of plate 1 were assessed, and a laser welding test evaluation was performed. The results are shown in Fig. 2. The polyethylene resin crystallized very rapidly, and cloudiness caused thereby was apparent over the entire plate. The cloudiness contributed to a relatively higher haze value. Due to the loss in transmitted light caused by the haze, the visible light transmittance at a wavelength of 940 nm was worse than when acrylic resin was used, but the results in the laser welding evaluation were substantially the same as when the acrylic resin was used.

(Example 10)

20 wt% of lanthanum hexaboride ($LaB_6$) nanoparticles (Sumitomo Metal Mining) expressed in terms of $LaB_6$, and 3 wt% of an S-24000 high-molecular-weight dispersant (made by Avecia; glass transition point: 62°C) were charged into isopropyl alcohol (IPA). The IPA dispersion was subjected to pulverizing and dispersing treatments using a paint shaker mill filled with zirconia beads to yield a dispersion having an average nanoparticle size of approximately 108 nm. 5 g of the UV-curing resin UV3701 (Toagosei) and 7 g of IPA were mixed with 2 g of the dispersion, and a coating liquid was obtained. A bar coater was used to apply the coating liquid on a 2-mm-thick transparent acrylic plate. Drying was performed for one minute at 70°C and the solvent was evaporated off. UV rays were then directed from a high-pressure mercury lamp, and the film was cured. The resulting film had a visible light transmittance of 41% and a haze value of 4.6%. The coating film adhering to the acrylic substrate was 5 $\mu$m thick, as measured using a stylus profilometer. According to the solids ratio, the concentration of $LaB_6$ nanoparticles in the film was 7.4 wt% and the $LaB_6$ nanoparticle content to a depth of 5 $\mu$m was 0.44 g/m$^2$.

The acrylic resin plate, which had been coated with a film in which the $LaB_6$ nanoparticles had been uniformly dispersed in the UV-curing resin along with the dispersant, and a transparent acrylic resin plate (plate 2) were brought together with the coated acrylic plate surface therebetween. The plates were then tightly bonded using a compression jig. The assembly was irradiated with a laser beam across a 3 cm area in the central region. As shown in Fig. 2, the results were substantially the same across all categories in comparison to when plate 1 had been used, with the $LaB_6$ nanoparticles kneaded over the entirety of the plate test piece.

As is evident from Fig. 2, using a light-absorbing resin compounded with hexaboride nanoparticles allows visible light to be adequately transmitted and a clear degree of transparency to be preserved. In addition, an attractive weld is obtained with consistent surface gloss, and it becomes possible to perform laser welding devoid of any problem in regard to the appearance or strength of the joined region.

(Comparative Example 4)

The same procedure performed in Examples 1 through 3 was followed, with the exception that the molding thickness performed using a T-die in Example 2 was changed to 5.0 mm, and the percentage of the resin diluted in plate 1 from the master batch was changed so that the concentration of $LaB_6$ in plate 1 reached 0.0002% (the amount of $LaB_6$ nanoparticles at a depth of 1 mm in the plate was 0.0024 g/m$^2$). A toluene dispersion in which the $LaB_6$ had been uniformly dispersed, a light-absorbing resin composition for use in laser welding, a master batch, and plate 1 (light-absorbing resin molded article) were prepared in the stated order. The optical characteristics of plate 1 were assessed, and a laser welding test evaluation was performed. The results are shown in Fig. 2. The strength with which the two plates had been joined was very low, with the plates able to be readily separated by hand.

(Comparative Example 5)

A blender was used to uniformly mix acrylic resin pellets with non-dispersed lanthanum hexaboride ($LaB_6$) nanoparticles made by Sumitomo Metal Mining. The mixture was heated, caused to melt, and extruded at a thickness of 1.0 mm through a T-die to yield the acrylic resin plate 1 pertaining to Comparative Example 5, in which the $LaB_6$ nanoparticles were present in a concentration of 0.015 wt% (the amount of $LaB_6$ nanoparticles to a depth of 1 mm in the plate was 0.18 g/m$^2$). The optical characteristics of plate 1 were assessed, and a laser welding test evaluation was performed. The results are shown in Fig. 2.

Plate 1 exhibited a green color, but the variation was dramatic and the haze value was 45%. When laser welding was performed in the same manner as in Example 3, color variation and localized bubbling were observed, and the outward appearance was imperfect. The strength of the join was also inadequate.

(Comparative Example 6)

The procedure was performed in the same manner as followed in Example 1 to produce the dispersion pertaining to Comparative Example 6, with the exception that a high-molecular-weight dispersant was not used in the dispersion manufacturing step, and the duration of the dispersing performed using the paint shaker mill was changed to 10 min. The size of the LaB$_6$ nanoparticles dispersed in the resulting dispersion pertaining to Comparative Example 6 was measured to be 1250 nm. Then, following the same procedure used in Examples 2 and 3, the percentage of the resin diluted into the plate test piece from the master batch was changed so that the concentration of LaB$_6$ in plate 1 reached 0.007% (the amount of LaB$_6$ nanoparticles present to a depth of 1 mm in the plate was 0.084 g/m$^2$), and plate 1 was produced. The optical characteristics of plate 1 were assessed, and the laser welding test evaluation was performed. The results are shown in Fig. 2.

Plate 1 exhibited a green color tinged with bands of yellow, and had a haze value of 33%. The laser welding test revealed the join strength to be adequate, but dramatic color variation was observed.

## Claims

1. A light-absorbing resin composition for use in laser welding, consisting of
   a high-molecular-weight dispersant that has a glass transition temperature of 30°C or higher and laser-light-absorbing nanoparticles, wherein
   said laser-light-absorbing nanoparticles are nanoparticles of a hexaboride expressed by the general formula XB$_6$ (where X is one or more elements selected from La, Ce, Gd, Tb, Dy, Ho, Y, Sm, Eu, Er, Tm, Yb, Lu, Sr, and Ca) and have a mean particle size of 1000 nm or less, and
   the amount of said high-molecular-weight dispersant is equivalent to two to ten times the weight of said laser-light-absorbing nanoparticles in said composition.

2. A light-absorbing resin molded article in which the composition according to Claim 1 is diluted using a thermo-plastic resin and said high-molecular-weight dispersant present in said composition, kneaded, and molded, wherein the amount of hexaboride nanoparticles present in a region that is 3 mm or less from a surface, which region constitutes a surface layer of said molded article, is from 0.004 g/m$^2$ or greater to 2.0 g/m$^2$ or less.

3. The molded article according to Claim 2, in which the composition according to Claim 1 is diluted using a thermoplastic resin and a high-molecular-weight dispersant present in said composition, kneaded, and molded, wherein said molded article is in the configuration of a plate or film.

4. The molded article according to Claim 2 or 3, wherein
   said thermoplastic resin is one or more resins selected from the group consisting of an acrylic resin, a polycarbonate resin, a styrene resin, a low-density polyethylene resin, a polypropylene resin, a polyurethane resin, a polyamide resin, a polyethylene terephthalate resin, a polybutylene terephthalate resin, and a fluororesin.

5. A light-absorbing molded article, wherein
   said composition according to Claim 1 is diluted using a binder, and applied on a surface of a substrate.

6. The molded article according to any of Claims 2 through 5, wherein
   the visible light transmittance is 30% or greater, the maximum absorption value is at a wavelength of 800 to 1100 nm, and the haze value is 30% or less.

7. A method for manufacturing a light-absorbing molded article in which a composition consisting of laser-light-absorbing nanoparticles and a high-molecular-weight dispersant having a glass transition temperature of 30°C or higher, in which the amount of said high-molecular-weight dispersant is equivalent to two to ten times the weight of said laser-light-absorbing nanoparticles, is diluted using a thermoplastic resin and said high-molecular-weight dispersant contained in said composition, kneaded, and molded, said method comprising:

diluting said laser-light-absorbing nanoparticles, which are nanoparticles of a hexaboride expressed by the general formula $XB_6$ (where X is one or more elements selected from La, Ce, Gd, Tb, Dy, Ho, Y, Sm, Eu, Er, Tm, Yb, Lu, Sr, and Ca) and having a mean particle size of 1000 nm or less, using said high-molecular-weight dispersant and said thermoplastic resin so that the amount of hexaboride nanoparticles present in a region that is 3 mm or less from a surface, which region is a surface layer of said molded article, is from 0.004 g/m$^2$ or greater to 2.0 g/m$^2$ or less;

kneading;

molding; and

manufacturing the light-absorbing resin molded article.


## Patentansprüche

1. Licht-absorbierende Harz-Zusammensetzung zur Verwendung beim Laserschweißen, bestehend aus einem Dispersionsmittel mit hohem Molekulargewicht, das eine Glasübergangstemperatur von 30°C oder höher aufweist, und Laserlicht-absorbierenden Nanopartikeln, wobei die Laserlicht-absorbierenden Nanopartikel aus einem Hexaborid sind, das durch die allgemeine Formel $XB_6$ ausgedrückt ist (wobei X ein oder mehr Elemente ausgewählt aus La, Ce, Gd, Tb, Dy, Ho, Y, Sm, Eu, Er, Tm, Yb, Lu, Sr und Ca ist) und eine mittlere Teilchengröße von 1000 nm oder weniger haben, wobei die Menge des Dispersionsmittels mit hohem Molekulargewicht zwei bis zehn Mal dem Gewicht der Laserlicht-absorbierenden Nanopartikel in der Zusammensetzung entspricht.

2. Aus Licht-absorbierendem Harz geformter Artikel, bei dem die Zusammensetzung nach Anspruch 1 unter Verwendung eines thermoplastischen Harzes und des in der Zusammensetzung vorhandenen Dispersionsmittels mit hohem Molekulargewicht verdünnt, geknetet und geformt ist, wobei die Menge von Hexaborid-Nanopartikeln, die in einem Bereich vorhanden sind, der 3 mm oder weniger von einer Oberfläche entfernt ist, welcher Bereich eine Oberflächenschicht des geformten Artikels bildet, von 0,004 g/m$^2$ oder mehr bis 2,0 g/m$^2$ oder weniger beträgt.

3. Geformter Artikel nach Anspruch 2, bei dem die Zusammensetzung nach Anspruch 1 unter Verwendung eines thermoplastischen Harzes und eines in der Zusammensetzung vorhandenen Dispersionsmittels mit hohem Molekulargewicht verdünnt, geknetet und geformt ist, wobei der geformte Artikel die Konfiguration einer Platte oder eines Films aufweist.

4. Geformter Artikel nach Anspruch 2 oder 3, wobei das thermoplastische Harz ein oder mehr Harze ist, ausgewählt aus der Gruppe bestehend aus einem Acryl-Harz, einem Polykarbonat-Harz, einem Styrol-Harz, einem Polyethylen-Harz geringer Dichte, einem Polypropylen-Harz, einem Polyurethan-Harz, einem Polyamid-Harz, einem Polyethylen-Terephtalat-Harz, einem Polybutylen-Terephtalat-Harz, und einem Fluor-Harz.

5. Lichtabsorbierender geformter Artikel, wobei die Zusammensetzung nach Anspruch 1 unter Verwendung eines Bindemittels verdünnt ist, und auf einer Oberfläche eines Substrats aufgebracht ist.

6. Geformter Artikel nach einem der Ansprüche 2 bis 5, wobei die Transmittanz sichtbaren Lichts 30% oder mehr beträgt, der maximale Absorptionswert bei einer Wellenlänge von 800 bis 1100 nm liegt, und der Trübungsgrad 30% oder weniger beträgt.

7. Verfahren zur Herstellung eines Licht-absorbierenden geformten Artikels, in dem eine Zusammensetzung, die aus Laserlicht-absorbierenden Nanopartikeln und einem Dispersionsmittel mit hohem Molekulargewicht mit einer Glasübergangstemperatur von 30°C oder mehr besteht, wobei die Menge des Dispersionsmittels mit hohem Molekulargewicht zwei bis zehn Mal dem Gewicht der Laserlicht-absorbierenden Nanopartikel entspricht, verdünnt wird unter Verwendung eines thermoplastischen Harzes und des in der Zusammensetzung enthaltenen Dispersionsmittels mit hohem Molekulargewicht, geknetet wird, und geformt wird, wobei das Verfahren umfaßt:

Verdünnen der Laserlicht-absorbierenden Nanopartikel, wobei die Nanopartikel aus einem Hexaborid sind, ausgedrückt durch die allgemeine Formel $XB_6$ (wobei X ein oder mehr Elemente ausgewählt aus La, Ce, Gd, Tb, Dy, Ho, Y, Sm, Eu, Er, Tm, Yb, Lu, Sr und Ca ist), und eine mittlere Teilchengröße von 1000 nm oder weniger haben, unter Verwendung des Dispersionsmittels mit hohem Molekulargewicht und des thermoplastischen Harzes derart, dass die Menge von Hexaborid-Nanopartikeln, die in einem Bereich vorhanden sind, der 3 mm oder weniger von einer Oberfläche entfernt ist, welcher Bereich eine Oberflächenschicht des geformten Artikels ist, von 0,004 g/m$^2$ oder mehr bis 2,0 g/m$^2$ oder weniger beträgt;
Kneten;
Formen; und
Herstellen des aus Licht-absorbierendem Harz geformten Artikels.

**Revendications**

1. Composition de résine absorbant la lumière pour une utilisation dans un soudage au laser, constituée de :

un dispersant de masse moléculaire élevée qui a une température de transition vitreuse de 30 °C ou plus et des nanoparticules absorbant la lumière laser,
dans laquelle
lesdites nanoparticules absorbant la lumière laser sont des nanoparticules d'un hexaborure représenté par la formule générale XB$_6$ (où X est un ou plusieurs éléments choisis parmi La, Ce, Gd, Tb, Dy, Ho, Y, Sm, Eu, Er, Tm, Yb, Lu, Sr et Ca) et ont une granulométrie moyenne de 1000 nm ou moins, et
la quantité dudit dispersant de masse moléculaire élevée est équivalente à deux à dix fois la masse desdites nanoparticules absorbant la lumière laser dans ladite composition.

2. Article moulé en résine absorbant la lumière dans lequel la composition selon la revendication 1 est diluée en utilisant une résine thermoplastique et ledit dispersant de masse moléculaire élevée présent dans ladite composition, malaxée et moulée, dans lequel la quantité de nanoparticules d'hexaborure présentes dans une région qui est à 3 mm ou moins d'une surface, laquelle région constitue une couche de surface dudit article moulé, est de 0,004 g/m$^2$ ou plus jusqu'à 2,0 g/m$^2$ ou moins.

3. Article moulé selon la revendication 2, dans lequel la composition selon la revendication 1 est diluée en utilisant une résine thermoplastique et un dispersant de masse moléculaire élevée présent dans ladite composition, malaxée et moulée, dans lequel ledit article moulé est dans la configuration d'une plaque ou d'un film.

4. Article moulé selon la revendication 2 ou 3, dans lequel ladite résine thermoplastique est une ou plusieurs résines choisies dans le groupe consistant en une résine acrylique, une résine de poly(carbonate), une résine de styrène, une résine de poly(éthylène) basse densité, une résine de poly(propylène), une résine de poly(uréthane), une résine de poly(amide), une résine de poly(téréphtalate d'éthylène), une résine de poly(téréphtalate de butylène) et une résine fluorée.

5. Article moulé absorbant la lumière, dans lequel
ladite composition selon la revendication 1 est diluée en utilisant un liant, et appliquée sur une surface d'un substrat.

6. Article moulé selon l'une quelconque des revendications 2 à 5, dans lequel
la transmittance de la lumière visible est de 30 % ou plus, la valeur d'absorption maximale est à une longueur d'onde de 800 à 1 100 nm, et la valeur de trouble (« haze value ») est de 30 % ou moins.

7. Procédé de fabrication d'un article moulé absorbant la lumière dans lequel une composition constituée de nanoparticules absorbant la lumière laser et d'un dispersant de masse moléculaire élevée ayant une température de transition vitreuse de 30 °C ou plus, dans lequel la quantité dudit dispersant de masse moléculaire élevée est équivalente à deux à dix fois la masse desdites nanoparticules absorbant la lumière laser, est diluée en utilisant une résine thermoplastique et ledit dispersant de masse moléculaire élevée contenu dans ladite composition, malaxée et moulée, ledit procédé comprenant :

la dilution desdites nanoparticules absorbant la lumière laser, qui sont des nanoparticules d'un hexaborure représenté par la formule générale XB$_6$ (où X est un ou plusieurs éléments choisis parmi La, Ce, Gd, Tb, Dy, Ho, Y, Sm, Eu, Er, Tm, Yb, Lu, Sr et Ca) et ayant une granulométrie moyenne de 1000 nm ou moins, en utilisant ledit dispersant de masse moléculaire élevée et ladite résine thermoplastique de sorte que la quantité de nanoparticules d'hexaborure présentes dans une région qui est à 3 mm ou moins d'une surface, laquelle région est une couche de surface dudit article moulé, soit de 0,004 g/m$^2$ ou plus jusqu'à 2,0 g/m$^2$ ou moins ;
le malaxage ;
le moulage ; et

la fabrication de l'article moulé en résine absorbant la lumière.

FIG. 1

FIG. 2

| | Laser-light-absorbing nanoparticles | Nanoparticle content | Nanoparticle size | Thermoplastic resin | Appearance of joins | Join strength | Visible light transmittance | Transmittance at 940 nm | Haze |
|---|---|---|---|---|---|---|---|---|---|
| | | (g/m²) | (nm) | | | | (%) | (%) | (%) |
| Exmpl. 1-3 | LaB₆ | 0.18 | 113 | Acrylic | Good | O | 68 | 22 | 2 |
| Exmpl. 4 | CeB₆ | 0.216 | 92 | Acrylic | Good | O | 57 | 11 | 4 |
| Exmpl. 5 | GdB₆ | 0.408 | 126 | Polycar-bonate | Good | O | 43 | 4 | 4.1 |
| Exmpl. 6 | YB₆ | 0.216 | 181 | PET | Good | O | 61 | 16 | 8.6 |
| Exmpl. 7 | LaB₆ | 0.54 | 110 | Polysty-rene | Good | O | 35 | 5 | 7.5 |
| Exmpl. 8 | LaB₆ | 0.084 | 107 | Poly-amide | Good | O | 77 | 28 | 5.4 |
| Exmpl. 9 | LaB₆ | 0.216 | 111 | Poly-ethylene | Good | O | 60 | 14 | 15 |
| Exmpl. 10 | LaB₆ | 0.44 | 108 | Acrylic | Good | O | 41 | 3 | 4.6 |
| Comp. Ex. 2 | ITO | 2.88 | 140 | Acrylic | Good | X | 91 | 73 | 8.4 |
| Comp. Ex. 3 | ATO | 2.88 | 115 | Acrylic | Good | X | 91 | 76 | 7.5 |
| Comp. Ex. 4 | LaB₆ | 0.0024 | 99 | Acrylic | Good | △ | 88 | 49 | 2.3 |
| Comp. Ex. 5 | LaB₆ | 0.18 | - | Acrylic | Bubbles/clouding | △ | 86 | 74 | 45 |
| Comp. Ex. 6 | LaB₆ | 0.084 | 1250 | Acrylic | Color variation | O | 76 | 48 | 33 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004148800 A
- JP 2005290087 A
- WO 2005084955 A1
- JP 2000096034 A
- WO 2005084955A1 A